# EUROPÄISCHE PATENTSCHRIFT

(11) **EP 0 812 533 B1**
(45) Veröffentlichungstag und Bekanntmachung des Hinweises auf die Patenterteilung: **21.02.2001**
(21) Anmeldenummer: 97109422.2
(22) Anmeldetag: 11.06.1997
(51) Int. Cl.: A01G 3/04

(54) **Einrichtung zum Schneiden von Hecken und dergleichen**
Device for cutting hedges and the like
Dispositif pour couper des haies et analogues

(30) Priorität: 12.06.1996 DE 19623444
(43) Veröffentlichungstag der Anmeldung: 17.12.1997
(73) Patentinhaber: Pieroth, Armin, 55411 Bingen (DE); Pieroth, Udo, 55411 Bingen (DE)
(72) Erfinder: Pieroth, Armin, 55411 Bingen (DE); Pieroth, Udo, 55411 Bingen (DE)
(74) Vertreter: Becker, Bernd, Dipl.-Ing.

(56) Entgegenhaltungen:
- DE-A- 2 704 901
- DE-A- 3 932 020
- FR-A- 2 033 676

## Beschreibung

Die Erfindung bezieht sich auf eine Einrichtung zum Schneiden von Hecken und dergleichen, die an einem Fahrgestell, insbesondere einer Zugmaschine befestigbar ist, mit einem im wesentlichen umgekehrt U-förmigen Rahmen, dessen Rahmenteile jeweils einen Schneidbalken mit angetriebenen Schneidwerkzeugen tragen.

Hecken, Weinstöcke und dergleichen werden üblicherweise entweder von Hand mittels Scheren oder maschinell mit Hilfe von Schneidmaschinen beschnitten. Letztere sind allgemein als eine an einem Trägerfahrzeug angebaute Vorrichtung ausgebildet, die aus einem vertikal und einem horizontal angeordneten Schneidwerkzeugbalken mit hin- und hergehenden oder rotierenden Schneidwerkzeugen sowie mit zugehörigen Antriebselementen besteht.

Die DE 39 32 020 A1 zeigt eine Vorrichtung zum Schneiden von Hecken, die mindestens einen mit angetriebenen Schneidwerkzeugen versehenen Schneidbalken umfaßt, der über einen U-förmigen Rahmen an einem Fahrgestellt befestigt ist. Hierbei arbeitet der Schneidbalken in einer schrägen, von der Schnittfläche der Hecke zu der heckenparallelen Fahrtrichtung des Fahrgestells verlaufenden Ebene. Um ein allseitiges Beschneiden der Hecke beim einmaligen Durchfahren zu erreichen, umfaßt die Vorrichtung drei umgekehrt U-förmig angeordnete Schneidbalken.

Streng gezogene Hecken, Weinbergszeilen, Obstzeilen und ähnliches, die einen rechteckigen oder leicht trapezförmigen Querschnitt aufweisen, werden mit Maschinen beschnitten, die Schneideinrichtungen aufweisen, welche die Hecken im wesentlichen in einer umgekehrten U-Form übergreifen. Diese Schneidmaschinen werden von Trägerfahrzeugen, vorzugsweise Zugmaschinen, an der Hecke entlang gefahren, wobei die Schneidwerkzeuge die überstehenden Triebe der Hecke schneiden, schlagen oder sägen. Die zu schneidenden Hecken sind unterschiedlich hoch und unterschiedlich breit. Selbst in Weinbergen, wo derartige Schneidgeräte die weiteste Verbreitung gefunden haben, da die Weinberge flächenmäßig sehr groß sind und die Rebstöcke mehrmals, bis zu achtmal im Jahr geschnitten werden müssen, muß die Schnittbreite oft verstellt werden, weil die Laubwand je nach Rebsorte, Standweite, Standort und Zeilenbreite unterschiedlich dick gehalten wird. Viele der bekannten Schneidgeräte besitzen die Möglichkeit, den der Hecke benachbarten Schneidbalken mechanisch, hydraulisch oder elektrisch im Winkel zu verstellen, wobei darauf geachtet werden muß, daß sich der Winkel der Schneidwerkzeuge zur Laubwand aus den genannten Gründen nicht wesentlich verändert. Der äußere Schneidbalken wird hierbei manuell über zwei ineinander verlaufende Vierkantrohre teleskopartig verschoben. Die Verstellung der Schnittbreite kann somit nicht während des Schnittvorganges, sondern nur bei Stillstand des Schneidgerätes vorgenommen werden. Insofern bietet ein solches Gerät nur eine sehr geringe Variabilität.

Darüber hinaus ist gesetzlich vorgeschrieben, daß die Schneidgeräte für den Straßentransport zum Trägerfahrzeug bzw. zur Zugmaschine hinzuklappen oder -zudrehen sind, damit sie nicht vorstehen und eine Gefahr für den übrigen Verkehr bilden. Hierfür wird entweder die komplette Maschine in einem Gelenk an der Maschinenaufhängung verdreht oder die äußeren Schneidwerkzeugbalken werden eingeschoben, wobei der obere Schneidwerkzeugbalken separat nach hinten gedreht und nach oben gekippt oder seitlich verschoben werden muß. Teilweise sind die dazu erforderlichen Bewegungen derart kompliziert, daß sie nur von Hand ausgeführt werden können und eine hydraulische oder elektrische Betätigungseinrichtung hierfür zu kostspielig wäre.

Es ist Aufgabe der Erfindung, eine Einrichtung zum Schneiden von Hecken und dergleichen der eingangs genannten Art zu schaffen, bei der die Schnittbreite für die Hecken zur Erzielung einer guten Schnittqualität auf einfache Weise variabel und optimal eingestellt werden kann, und die auch für den Straßentransport geeignet ist.

Erfindungsgemäß wird die Aufgabe dadurch gelöst, daß das obere Rahmenteil und das vom Fahrgestell der Zugmaschine entfernte vertikale Rahmenteil gegenüber dem am Fahrgestell starr angeordneten vertikalen Rahmenteil des umgekehrt U-förmigen Rahmens verschwenkbar ist, wobei die Schneidwerkzeuge der sich gegenüberliegenden vertikalen Schneidbalken beim Verschwenken der Rahmenteile stets parallel zueinander ausgerichtet sind.

Hierdurch wird eine leicht realisierbare Veränderung der Schnittbreite der Schneideinrichtung ermöglicht, wodurch eine besonders gute Schnittqualität an den Hecken erzielt wird.

Die erfindungsgemäße Einrichtung ist leicht zu bedienen und durch die Verstellbarkeit der Rahmenteile universell für die unterschiedlichen Heckenarten oder dergleichen einsetzbar. Darüber hinaus bietet diese Schneideinrichtung eine kostengünstige Herstellung gegenüber vergleichbaren bekannten Schneidgeräten. Eine solche Schneideinrichtung wird in der Regel vor oder seitlich am Trägerfahrzeug montiert. Als Trägerfahrzeug kommen beispielsweise Zugmaschinen, Unimog, Akkerschlepper oder Weinbau-Schmalspurschlepper in Betracht. Die Lenkbewegung der Vorderräder des Fahrzeuges übertragen sich im allgemeinen besonders bei Fahrfehlern in ungünstiger Weise auf die Schneidmaschine. Je geringer die Schnittbreite wird, um so empfindlicher ist die Hecke für Fahrfehler, weil dadurch in den nichtzulässigen Bereich einer Hecke hineingeschnitten und diese schwer beschädigt wird. Dies kann unter Umständen bis zum Absterben der Hecke führen. Insofern ist der variabel verstellbare umgekehrt U-förmige Rahmen besonders geeignet, derartige Nachteile zu vermeiden und eine Hekke umfangsseitig vollständig und mit hoher Qualität zu beschneiden. Die gute Schnittqualität wird insbesondere dadurch erreicht, daß unabhängig von der jeweils eingestellten Schnittbreite die seitlich der Hecke geführten Schneidwerkzeuge immer parallel zueinander verlaufend angeordnet sind.

Zweckmäßigerweise sind die Rahmenteile mittels einer Verstelleinrichtung in oder entgegengesetzt der Fahrt- bzw. Arbeitsrichtung verschwenkbar. Bevorzugt hierbei ist, daß das obere horizontale Rahmenteil und das vom Fahrgestell der Zugmaschine entfernte vertikale Rahmenteil entgegengesetzt der Fahrt- bzw. Arbeitsrichtung, also nach hinten, verschwenkt werden. Je weiter die Schnittstellen in Fahrt- bzw. Arbeitsrichtung nach hinten verlagert werden, um so weniger wirkt sich der Lenkeinschlag der Zugmaschine unmittelbar auf die Schnittqualität aus. Im Idealfall liegen die Schnittstellen neben dem Hinterrad der Zugmaschine, so daß der Lenkeinschlag praktisch keinen unmitelbaren Einfluß hat.

In bevorzugter Ausbildungsform der Erfindung ist die Verstelleinrichtung ein von der Hydraulikanlage der Zugmaschine betätigbarer Hydraulikhubzylinder, eine elektrische Hubspindel oder dergleichen motorisch angetriebenes Stellorgan. Die Ausbildung der Verstelleinrichtung als Hydraulikhubzylinder ist eine kostengünstige Lösung, da diese Hydraulikhubzylinder die zur Zeit billigsten Linearmotoren darstellen. Die erforderliche Hydraulikanlage ist an sich schon bei der Zugmaschine vorhanden, da sie auch für den Antrieb der Schneidwerkzeuge erforderlich ist. Insbesondere bei Weinbergschleppern gehört eine leistungsstarke Hydraulikanlage mit den entsprechenden Zapfstellen, Ventilen, Mengenreglern usw. zum Standard, so daß sich in dieser Hinsicht keine zusätzlichen Mehrkosten ergeben. Andererseits ist es selbstverständlich auch denkbar, daß die Verstelleinrichtung eine manuell betätigbare Gewindespindel oder dergleichen ist.

In einer besonderen Ausgestaltung der Erfindung ist die Verstelleinrichtung an einem das obere Rahmenteil bildenden Gelenkparallelogramm befestigt. Die Verstelleinrichtung bewirkt eine Veränderung des Verstellwinkels des Gelenkparallelogramms, so daß dieses, in Fahrt- bzw. Arbeitsrichtung gesehen, nach hinten oder nach vorn verschwenkt wird, wodurch sich die Schnittbreite zwischen den Schneidwerkzeugen verändert.

Das Gelenkparallelogramm besteht aus zwei parallel zueinander angeordneten Armen und zwei diese verbindenden Gelenkblechen, die jeweils über Gelenke schwenkbeweglich miteinander verbunden sind. Auf Grund dieser Ausbildung des Gelenkparallelogramms ändert sich hierbei der Schnittwinkel der Schneidwerkzeuge in Bezug auf die Laub- bzw. Heckenwand nicht, so daß immer ein gleichmäßiger und optimaler Schnitt bei guter Schnittqualität ausgeführt werden kann. Hierbei sind notwendigerweise die Gelenkbleche mit jeweils einem ihrer Gelenke mit den sich gegenüberliegenden Rahmenteilen des umgekehrt U-förmigen Rahmens drehbeweglich verbunden.

Um auch im Querschnitt leicht trapezförmige Hecken oder dergleichen beschneiden zu können, ist das vom Fahrgestell der Zugmaschine entfernte Rahmenteil gegenüber dem durch das Gelenkparallelogramm gebildete obere Rahmenteil des umgekehrt U-förmigen Rahmens mittels eines Gelenkorgans verschwenkbar. Durch das Gelenkorgan wird eine Richtungsparallelität des äußeren vertikalen Schneidbalkens mit seinen Schneidwerkzeugen zu den Schneidwerkzeugen des inneren vertikalen Schneidbalkens gewährleistet. Darüber hinaus ist das Gelenkorgan zur Veränderung des Öffnungswinkels des vom Fahrgestell der Zugmaschine entfernten Rahmenteils des umgekehrt U-förmigen Rahmens vorgesehen. Das Gelenkorgan in Verbindung mit dem äußeren vertikalen Rahmenteil kann dabei durch Rastmittel oder schraubenartigen Festspannmitteln arretiert werden und zwar derart, daß eine symmetrische Parallelität der Schneidwerkzeuge an den sich gegenüberliegenden vertikalen Schneidbalken gewährleistet bleibt. Dabei ist es möglich, das vom Fahrgestell der Zugmaschine entfernte Rahmenteil quer zur Hecke nach innen oder außen zu verstellen.

In weiterer Ausbildung der Erfindung ist das obere Rahmenteil und das vom Fahrgestell der Zugmaschine entfernte Rahmenteil gegenüber dem am Fahrgestell starr angeordneten Rahmenteil des umgekehrt U-förmigen Rahmens zwischen einer maximalen Schnittbreite und einer minimalen Schnittbreite der an den sich gegenüberliegenden vertikalen Schneidbalken angeordneten Schneidwerkzeuge stufenlos verstellbar. Dadurch kann die optimale Schnittbreite den jeweiligen Schneiderfordernissen der Hecke oder dergleichen angepaßt werden. Besonders zweckmäßig ist hierbei, daß die Arbeitsstellung des umgekehrt U-förmigen Rahmens bei minimaler Schnittbreite gleichzeitig der Transportstellung der Schneideinrichtung entspricht. Mit dieser Stellung wird verhindert, daß Gefahren für den übrigen Verkehr auf der Straße beim Transport der Schneideinrichtung mittels der Zugmaschine entstehen. Für den Straßentransport wird nämlich die Schneideinrichtung mit den gleichen technischen Mittel nach hinten geklappt, ohne daß dazu irgendein zusätzlicher Aufwand notwendig ist.

Zusätzlich kann die Schneideinrichtung mittels eines am Fahrgestell der Zugmaschine angeordneten, lageverstellbaren Trägers höhen- und winkelverstellbar ausgebildet sein, wobei der lageverstellbare Träger manuell oder maschinell von der Zugmaschine aus betätigbar ist. Durch diese Maßnahmen kann auch die Arbeitshöhe der Schneideinrichtung eingestellt werden. Hierfür werden zweckmäßigerweise die sowieso an der Zugmaschine vorhandenen Antriebsaggregate verwendet, die auch zum Antrieb der vorzugsweise als Kreissägeblätter ausgebildeten Schneidwerkzeuge vorgesehen sind.

Die Erfindung wird im folgenden anhand eines Ausführungsbeispieles unter Bezugnahme auf die zugehörige Zeichnung näher beschrieben. In der Zeichnung zeigen
- Fig. 1: eine rückseitige Ansicht einer erfindungsgemäß Einrichtung zum Schneiden von Hecken und dergleichen und
- Fig. 2: eine Draufsicht auf die Einrichtung nach Fig.1.

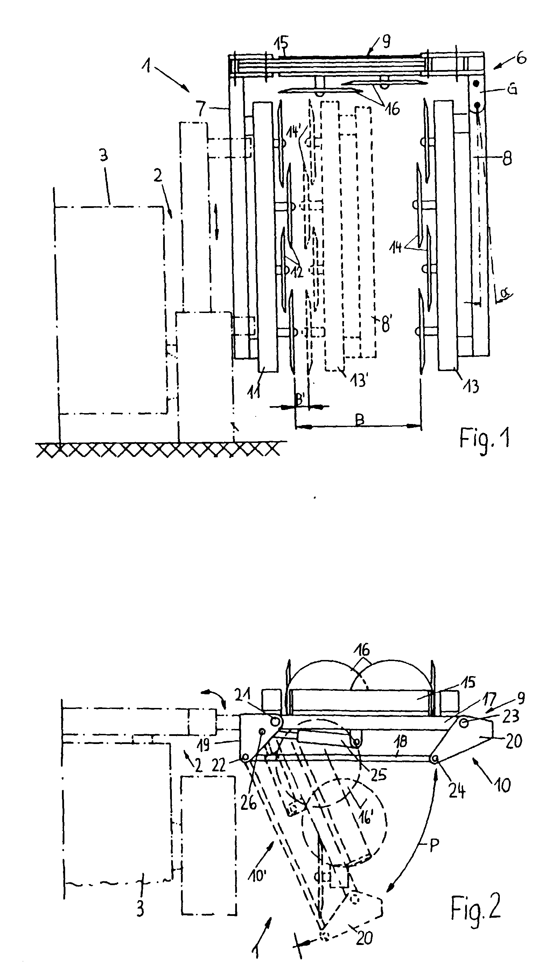

Die in den Fig. 1 und 2 dargestellte Schneideinrichtung 1 befindet sich in ihrer Arbeitsstellung. Die strichlierten Linien der jeweiligen Bauteile der Schneideinrichtung 1 zeigen entweder ihre Stellung für Transportzwecke oder in Arbeitsstellung bei der minimalen Schnittbreite B'. Die maximale schnittbreite B der Schneideinrichtung 1 ist gemäß Fig. 1 in ihrer Arbeitsstellung bzw. Fahrstellung ersichtlich. Die Richtung der Schwenkbewegung der Schneideinrichtung 1 ist durch den Pfeil P in Fig. 2 verdeutlicht.

Die Schneideinrichtung 1 ist an einem am Fahrgestell 2 einer schematisch dargestellten Zugmaschine 3 angeordneten lageverstellbaren Träger 4 befestigt. Der Träger 4 ist höhenverstellbar und neigungsverstellbar ausgebildet. Der Antrieb des Trägers 4 und auch der Schneideinrichtung 1 erfolgt über eine an der Zugmaschine 3 vorhandene Hydraulikanlage.

Wesentlicher Bestandteil der Schneideinrichtung 1 ist ein umgekehrt U-förmiger Rahmen 6, welcher am Träger 4 befestigt ist. Der umgekehrt U-förmige Rahmen 6 besteht aus einem am Träger 4 starr befestigten vertikalen Rahmenteil 7 und einem diesem gegenüber angeordneten vertikalen Rahmenteil 8,8'. Die oberen Enden der Rahmenteile 7 und 8 sind durch ein oberes horizontales Rahmenteil 9 verbunden. Das obere horizontale Rahmenteil 9 wird durch ein Gelenkparallelogramm 10,10' gebildet, auf welches später eingegangen wird. Das starre vertikale Rahmenteil 7 trägt einen inneren vertikalen Schneidbalken 11, der eine Mehrzahl von drehbar gelagerten angetriebenen Schneidwerkzeugen 12 trägt, die versetzt in parallelen Ebenen zueinander angeordnet sind. Das gegenüberliegende vertikale Rahmenteil 8 trägt in gleicher Weise einen äußeren vertikalen Schneidbalken 13,13', auf dem ebenfalls mehrere Schneidwerkzeuge 14,14' in parallelen Ebenen zueinander drehbar angeordnet sind. Auch das horizontale obere Rahmenteil 9 umfaßt einen horizontalen Schneidbalken 15, der mehrere Schneidwerkzeuge 16,16' aufweist, die in gleicher Weise angeordnet sind, wie die Schneidwerkzeuge 12 und 14 der vertikalen Schneidbalken 11 und 13.

Das äußere vertikale Rahmenteil 8 ist mittels eines Gelenkorgans G mit dem oberen horizontalen Rahmenteil 9 verbunden, wodurch das äußere Rahmenteil 8 mit dem zugehörigen, die Schneidwerkzeuge 14 aufweisenden Schneidbalken 13 um einen Winkel α nach innen und außen verschwenkt werden kann.

Das vorgenannte Gelenkparallelogramm 10, welches das obere horizontale Rahmenteil 9 des umgekehrt U-förmigen Rahmens 6 der Schneideinrichtung 1 bildet, besteht aus zwei parallel zueinander verlaufenden Armen 17 und 18, die an ihren jeweiligen Enden jeweils mit einem Gelenkblech 19 und 20 beweglich verbunden sind. Die entsprechende Verbindung erfolgt an den Verbindungsstellen mittels Gelenken 21 und 22 für das Gelenkblech 19 und Gelenken 23 und 24 für das Gelenkblech 20 mit den jeweiligen Enden der Arme 17 und 18. Am Arm 17 und am Gelenkblech 19 ist eine als Hydraulikhubzylinder 25 ausgebildete Verstelleinrichtung befestigt. Dieser Hydraulikhubzylinder 25 wird von der Hydraulikanlage der Zugmaschine 3 betätigt. Das eine Ende des Hydraulikhubzylinders 25 ist über einen Befestigungspunkt 26 mit dem Gelenkblech 19 und an seinem anderen Ende über einen weiteren Befestigungspunkt 27 mit dem Arm 17 fest verbunden.

Bei Betätigung des Hydraulikhubzylinders 25 durch die Hydraulikanlage der Zugmaschine 3 folgt zwangsläufig des Gelenkparallelogramms 10 in Richtung des Pfeiles P, so daß die zugehörigen Rahmenteile 8 und 9 mit den daran befestigten, die Schneidwerkzeuge 14 und 16 tragenden Schneidbalken 13 und 15 auf eine beliebige Schnittbreite zwischen B und B' verschwenkbar sind, die die Schnittbreite der Hecke bestimmt. Durch das Gelenkparallelogramm 10 wird erreicht, daß in jeder beliebigen Stellung der Schneideinrichtung 1 die sich seitlich gegenüberliegenden Schneidwerkzeuge 12 und 14 stets parallel zueinander angeordnet sind.

## Patentansprüche

1. Einrichtung zum Schneiden von Hecken und dergleichen, die an einem Fahrgestell, insbesondere einer Zugmaschine befestigbar ist, mit einem im wesentlichen umgekehrt U-förmigen Rahmen, dessen Rahmenteile jeweils einen Schneidbalken mit angetriebenen Schneidwerkzeugen tragen, dadurch gekennzeichnet, daß das obere Rahmenteil (9) und das vom Fahrgestell (2) der Zugmaschine (3) entfernte vertikale Rahmenteil (8) gegenüber dem am Fahrgestell (2) starr angeordneten vertikalen Rahmenteil (7) des umgekehrt U-förmigen Rahmens (6) verschwenkbar ist, wobei die Schneidwerkzeuge (12,14) der sich gegenüberliegenden vertikalen Schneidbalken (11,13) beim Verschwenken der Rahmenteile (8,9) stets parallel zueinander ausgerichtet sind.

2. Einrichtung nach Anspruch 1, dadurch gekennzeichnet, daß die Rahmenteile (8,9) mittels einer Verstelleinrichtung (25) in oder entgegengesetzt der Fahrt- bzw. Arbeitsrichtung verschwenkbar sind.

3. Einrichtung nach Anspruch 2, dadurch gekennzeichnet, daß die Verstelleinrichtung (25) ein von derHydraulikanlage der Zugmaschine betätigbarer Hydraulikhubzylinder, eine elektrische Hubspindel oder dergleichen motorisch angetriebenes Stellorgan ist.

4. Einrichtung nach Anspruch 2, dadurch gekennzeichnet, daß die Verstelleinrichtung (25) eine manuell betätigbare Gewindespindel oder dergleichen ist.

5. Einrichtung nach einem der Ansprüche 1 bis 4, dadurch gekennzeichnet, daß die Verstelleinrichtung (25) an einem das obere Rahmenteil (9) bildenden Gelenkparallelogramm (10) befestigt ist.

6. Einrichtung nach Anspruch 5, dadurch gekennzeichnet, daß das Gelenkparallelogramm (10) aus zwei parallel zueinander angeordneten Armen (17,18) und zwei diese verbindenden Gelenkblechen (19,20) besteht, die jeweils über Gelenke (21 bis 24) schwenkbeweglich miteinander verbunden sind.

7. Einrichtung nach Anspruch 6, dadurch gekennzeichnet, daß die Gelenkbleche (19,20) mit jeweils einem ihrer Gelenke (21,22 bzw. 23,24) mit den sich gegenüberliegenden Rahmenteilen (7,8) des umgekehrt U-förmigen Rahmens (6) drehbeweglich verbunden sind.

8. Einrichtung nach einem der Ansprüche 1 bis 7, dadurch gekennzeichnet, daß das vom Fahrgestell (2) der Zugmaschine (3) entfernte Rahmenteil (8) gegenüber dem durch das Gelenkparallelogramm (10) gebildete obere Rahmenteil (9) des umgekehrt U-förmigen Rahmens (6) mittels eines Gelenkorgans (G) verschwenkbar ist.

9. Einrichtung nach Anspruch 8, dadurch gekennzeichnet, daß das Gelenkorgan (G) zur Veränderung des Öffnungswinkels (α) des vom Fahrgestell (2) der Zugmaschine (3) entfernten Rahmenteils (8) des umgekehrt U-förmigen Rahmens (6) vorgesehen ist.

10. Einrichtung nach einem der Ansprüche 1 bis 9, dadurch gekennzeichnet, daß das obere Rahmenteil (9) und das vom Fahrgestell (2) der Zugmaschine (3) entfernte Rahmenteil (8) gegenüber dem am Fahrgestell (2) starr angeordneten Rahmenteil (7) des umgekehrt U-förmigen Rahmens (6) zwischen einer maximalen Schnittbreite (B) und einer minimalen Schnittbreite (B') der an den sich gegenüberliegenden vertikalen Schneidbalken (11,13) angeordneten Schneidwerkzeuge (12,14) stufenlos verstellbar ist.

11. Einrichtung nach einem der Ansprüche 1 bis 10, dadurch gekennzeichnet, daß die Arbeitsstellung des umgekehrt U-förmigen Rahmens (6) bei minimaler Schnittbreite (B') gleichzeitig der Transportstellung der Schneideinrichtung (1) entspricht.

12. Einrichtung nach einem der Ansprüche 1 bis 11, dadurch gekennzeichnet, daß diese mittels eines am Fahrgestell (2) der Zugmaschine (3) angeordneten lageverstellbaren Trägers (4) höhen- und neigungsverstellbar ausgebildet ist.

13. Einrichtung nach Anspruch 12, dadurch gekennzeichnet, daß der lageverstellbare Träger (4) manuell oder maschinell von der Zugmaschine (3) aus betätigbar ist.

14. Einrichtung nach einem der Ansprüche 1 bis 13, dadurch gekennzeichnet, daß die Schneidwerkzeuge (12,14,16) als Kreissägeblätter ausgebildet sind.

## Claims

1. Arrangement for cutting hedges and the like, which is mountable on a chassis, more especially of a tractor, having a frame, which substantially has the configuration of an inverted "U", and the frame portions of which each carry a cutting bar provided with driven cutting tools, characterised in that the upper frame portion (9) and the vertical frame portion (8), which is remote from the chassis (2) of the tractor (3), is pivotable relative to the vertical frame portion (7), rigidly disposed on the chassis (2), of the frame (6), which has the configuration of an inverted "U", the cutting tools (12,14) of the vertical cutting bars (11,13), which lie opposite each other, always being aligned parallel to each other during the pivotal movement of the frame portions (8,9).

2. Arrangement according to claim 1, characterised in that the frame portions (8,9) are pivotable, by means of an adjusting arrangement (25), in the driving or working direction or in opposition thereto.

3. Arrangement according to claim 2, characterised in that the adjusting arrangement (25) is a hydraulic lifting cylinder, which is actuatable by the hydraulic system of the tractor, an electrical lifting spindle or similar mechanically driven adjusting means.

4. Arrangement according to claim 2, characterised in that the adjusting arrangement (25) is a manually actuatable threaded spindle or the like.

5. Arrangement according to one of claims 1 to 4, characterised in that the adjusting arrangement (25) is mounted on a pivotal parallelogram (10) forming the upper frame portion (9).

6. Arrangement according to claim 5, characterised in that the pivotal parallelogram (10) comprises two arms (17,18), which are disposed parallel to each other, and two pivotal plates (19,20), which connect said arms and are pivotably interconnected via pivot joints (21 to 24).

7. Arrangement according to claim 6, characterised in that the pivotal plates (19,20) are rotatably connected, by one of their pivot joints (21,22 or respectively 23,24), to the frame portions (7,8), which lie opposite each other, of the frame (6) which has the configuration of an inverted "U".

8. Arrangement according to one of claims 1 to 7, characterised in that the frame portion (8), remote from the chassis (2) of the tractor (3), is pivotable by means of a pivotal member (G) relative to the upper frame portion (9), formed by the pivotal parallelogram (10), of the frame (6) which has the configuration of an inverted "U".

9. Arrangement according to claim 8, characterised in that the pivotal member (G) is provided in order to change the angle of opening (α) of the frame portion (8), remote from the chassis (2) of the tractor (3), of the frame (6) which has the configuration of an inverted "U".

10. Arrangement according to one of claims 1 to 9, characterised in that the upper frame portion (9) and the frame portion (8), which is remote from the chassis (2) of the tractor (3), are steplessly adjustable relative to the frame portion (7), which is rigidly disposed on the chassis (2), of the frame (6) which has the configuration of an inverted "U", between a maximum width of cut (B) and a minimum width of cut (B') of the cutting tools (12,14) disposed on the vertical cutting bars (11,13) situated opposite each other.

11. Arrangement according to one of claims 1 to 10, characterised in that, for a minimum width of cut (B'), the working position of the frame (6), which has the configuration of an inverted "U", corresponds at the same time to the conveying position of the cutting arrangement (1).

12. Arrangement according to one of claims 1 to 11, characterised in that said arrangement is configured to be vertically and inclinedly adjustable by means of a positionally adjustable carrier (4), which is disposed on the chassis (2) of the tractor (3).

13. Arrangement according to claim 12, characterised in that the positionally adjustable carrier (4) is manually or mechanically actuatable from the tractor (3).

14. Arrangement according to one of claims 1 to 13, characterised in that the cutting tools (12,14,16) are configured as circular saw blades.

## Revendications

1. Dispositif pour tailler des haies et similaires, qui peut être fixé à un châssis roulant, en particulier à un tracteur, avec un cadre sensiblement en forme de U inversé dont les parties portent chacune une barre de coupe avec des outils de coupe entraînés, caractérisé en ce que la partie supérieure (9) du cadre et la partie verticale (8) du cadre, éloignée du châssis roulant (2) du tracteur (3), sont pivotantes par rapport à la partie verticale (7), disposée rigidement sur le châssis roulant (2), du cadre (6) en U inversé, les outils de coupe (12, 14) des barres de coupe verticales (11, 13) se faisant face étant orientés toujours parallèlement entre eux pendant le pivotement des parties (8, 9) du cadre.

2. Dispositif selon la revendication 1, caractérisé en ce que les parties (8, 9) du cadre peuvent pivoter dans le sens de marche ou sens de travail ou dans le sens inverse, au moyen d'un dispositif de réglage (25).

3. Dispositif selon la revendication 2, caractérisé en ce que le dispositif de réglage (25) est un vérin hydraulique de levage qui peut être actionné au moyen du système hydraulique du tracteur, une broche de levage électrique ou un organe de réglage similaire entraîné par un moteur.

4. Dispositif selon la revendication 2, caractérisé en ce que le dispositif de réglage (25) est une broche filetée ou similaire à actionnement manuel.

5. Dispositif selon l'une des revendications 1 à 4, caractérisé en ce que le dispositif de réglage (25) est fixé à un parallélogramme articulé (10) qui forme la partie supérieure (9) du cadre.

6. Dispositif selon la revendication 5, caractérisé en ce que le parallélogramme articulé (10) est constitué de deux bras (17, 18) disposés parallèlement entre eux et de deux tôles articulées (19, 20) reliant ces bras, qui sont reliés entre eux dans chaque cas en pivotement par des articulations (21 à 24).

7. Dispositif selon la revendication 6, caractérisé en ce que les tôles articulées (19, 20) sont reliées à rotation, chacune par l'une de leurs articulations (21, 22, respectivement 23, 24), aux parties (7, 8) qui se font face du cadre (6) en forme de U inversé.

8. Dispositif selon l'une des revendications 1 à 7, caractérisé en ce que la partie (8) du cadre éloignée du châssis roulant (2) du tracteur (3), peut pivoter au moyen d'un organe d'articulation (G) par rapport à la partie supérieure (9) du cadre (6) en forme de U inversé, formée par le parallélogramme articulé (10).

9. Dispositif selon la revendication 8, caractérisé en ce que l'organe d'articulation (G) est prévu pour faire varier l'angle d'ouverture (α) de la partie (8) du cadre (6) en forme de U inversé, éloignée du châssis roulant (2) du tracteur (3).

10. Dispositif selon l'une des revendications 1 à 9, caractérisé en ce que la partie supérieure (9) du cadre et la partie (8) du cadre éloignée du châssis roulant (2) du tracteur (3), sont réglables en continu par rapport à la partie (7), disposée rigidement sur le châssis roulant (2), du cadre (6) en forme de U inversé, entre une largeur de coupe maximale (B) et une largeur de coupe minimale (B') des outils de coupe (12, 14) disposés sur les barres de coupe verticales (11, 13) se faisant face.

11. Dispositif selon l'une des revendications 1 à 10, caractérisé en ce que la position de travail du cadre (6) en forme de U inversé correspond en même temps, pour la largeur de coupe minimale (B'), à la position de transport du dispositif de coupe (1).

12. Dispositif selon l'une des revendications 1 à 11, caractérisé en ce que celui-ci est conçu de manière à pouvoir être réglé en hauteur et en inclinaison, au moyen d'un support (4), réglable en position, disposé sur le châssis roulant (2) du tracteur (3).

13. Dispositif selon la revendication 12, caractérisé en ce que le support (4) réglable en position peut être actionné manuellement ou mécaniquement à partir du tracteur (3).

14. Dispositif selon l'une des revendications 1 à 13, caractérisé en ce que les outils de coupe (12, 14, 16) sont réalisés sous la forme de lames de scie circulaire.
